# EUROPEAN PATENT APPLICATION

(11) **EP 3 424 884 A1**
(43) Date of publication of application: **09.01.2019**
(21) Application number: 16897892.2
(22) Date of filing: 06.04.2016
(51) Int. Cl.: C02F 1/44, B01D 61/04, B01D 61/12, B01D 65/08

(54) **WATER TREATMENT SYSTEM, WATER TREATMENT METHOD**

(71) Applicant: Mitsubishi Heavy Industries Engineering, Ltd., Nishi-ku, Yokohama-shi, Kanagawa 2208401 (JP)
(72) Inventor: SAKURAI Hideaki, Tokyo 108-8215 (JP); UKAI Nobuyuki, Tokyo 108-8215 (JP); SUZUKI Hideo, Tokyo 108-8215 (JP); NAKASHOJI Hiroshi, Tokyo 108-8215 (JP)
(74) Representative: Henkel, Breuer & Partner
(86) International application number: PCT/JP2016/061259
(87) International publication number: WO 2017/175334

(57) **Abstract**

A water treatment system (100) is provided with: a pretreatment device (1) which generates primary treated water by performing a pretreatment on water to be treated; a membrane separation device (2) having a reverse osmosis membrane through which the primary treated water is passed to be separated into concentrated water and permeated water; a first sensor device (3) which is provided between the pretreatment device (1) and the membrane separation device (2) and which detects the presence or absence of occurrence of biofouling caused by the primary treated water; a second sensor device (4) which is provided on a downstream side from the membrane separation device and which detects the presence or absence of scale deposition caused by the concentrated water; and a control device (5) which determines, on the basis of the amount of biofouling and the amount of scale deposition, operation parameters including the pressure and flow rate of the primary treated water being supplied to the membrane separation device (2).

## Description

### [Technical Field]

The present invention relates to a water treatment system and a water treatment method.

### [Background Art]

Salts and other inorganic components are contained in treated water generated by desalination of seawater or treatment of industrial wastewater. When discharging such treated water to the outside, in order to reduce the influence on the environment, a treatment for removing the aforementioned components is applied. More specifically, in the desalination of seawater, permeated water as fresh water is obtained by removing salts or other inorganic components from seawater. Also, in industrial wastewater treatment, the amount of effluent is reduced by concentrating the salts or other inorganic components. As a device for performing such a treatment, for example, a device using a reverse osmosis membrane (RO membrane) is known in the related art. Water to be treated is separated into concentrated water containing the above components and permeable water, using the RO membrane. Each of the concentrated water and the permeable water is processed by separately provided devices.

When an RO membrane is used for a long time or when concentration fluctuation occurs in the water to be treated, in some cases, organic substances such as microorganisms contained in the impurities adhere to the surface of the RO membrane, thereby forming a biofilm such as "slime". When a biofilm is formed, the performance of the RO membrane cannot be maintained. Therefore, a technique capable of suppressing the formation of such a biofilm is desired.

As an example of such a technique, a technique described in Patent Literature 1 below is known. Patent Literature 1 discloses a reverse osmosis membrane filtration plant. In the plant, concentrated water led from a downstream side of the reverse osmosis membrane module is caused to circulate in a biofilm-forming base material having a reverse osmosis membrane. By periodically evaluating a biofilm amount on the surface of the biofilm-forming base material, the operating conditions of the plant are controlled.

### [Citation List]

### [Patent Literature]

[Patent Literature 1]
Japanese Patent No. 5600864

### [Summary of Invention]

### [Technical Problem]

On the other hand, in the apparatus using the aforementioned reverse osmosis membrane, in some cases, when ionic components contained in the concentrated water are crystallized in addition to biofilms derived from organic substances or microorganisms, the scale is precipitated on the surface of the reverse osmosis membrane. However, in the apparatus described in Patent Literature 1, a control according to the presence or absence of the occurrence of a biofilm is only performed, and a control according to scale precipitation is not considered. As a result, in some cases, the control of the apparatus cannot be precisely performed.

The present invention has been made to solve the above problems, and an object of the present invention is to provide a water treatment system and a water treatment method capable of performing a more accurate control.

### [Solution to Problem]

A water treatment system according to a first aspect of the present invention includes a pretreatment device which generates primary treated water by performing pretreatment on water to be treated; a membrane separation device having a reverse osmosis membrane through which the primary treated water passes to be separated into concentrated water and permeable water; a first sensor device provided between the pretreatment device and the membrane separation device to detect the presence or absence of the occurrence of biofouling caused by the primary treated water; a second sensor device provided on a downstream side of the membrane separation device to detect the presence or absence of scale precipitation caused by the concentrated water; and a control device which determines operating parameters including a supply pressure and a supply flow rate of the primary treated water with respect to the membrane separation device, on the basis of the presence or absence of the occurrence of biofouling and the presence or absence of scale precipitation.

According to this configuration, the control device determines the supply pressure and the supply flow rate of the primary treated water to the membrane separation device, on the basis of the presence or absence of the occurrence of biofouling caused by the primary treated water and the presence or absence of the scale precipitation caused by the concentrated water. This makes it possible to more precisely adjust the processing capacity of the membrane separation device, for example, as compared with a case where the above parameters are determined only on the basis of characteristic values of the primary treated water.

According to a second aspect of the present invention, the water treatment system according to the first aspect may further include a pressure-adjusting valve which changes a supply pressure of the primary treated water with respect to the membrane separation device; and a pump which changes the supply flow rate of the primary treated water, wherein the control device may adjust the operating parameters by changing an opening degree of the pressure-adjusting valve and a discharge amount of the pump, on the basis of the presence or absence of the occurrence of the biofouling and the presence or absence of the scale precipitation.

According to this configuration, simply by changing the opening degree of the pressure-adjusting valve and the discharge amount of the pump on the basis of the presence or absence of the occurrence of biofouling and the presence or absence of scale precipitation, the processing capacity of the membrane separation device can be easily adjusted.

According to a third aspect of the present invention, a water treatment method is provided, including: a pretreatment step of generating primary treated water by performing pretreatment on water to be treated; a separation step of separating the primary treated water into concentrated water and permeable water by causing the primary treated water to pass through a reverse osmosis membrane; a first acquisition step of detecting the presence or absence of the occurrence of biofouling caused by the primary treated water; a second acquisition step of detecting the presence or absence of scale precipitation caused by the concentrated water; and a parameter determining step of determining operating parameters in the pretreatment step and the separation step on the basis of the presence or absence of the occurrence of the biofouling and the presence or absence of the scale precipitation.

According to this method, the supply pressure and the supply flow rate of the primary treated water are determined on the basis of the characteristic value of the primary treated water and the characteristic value of the concentrated water. This makes it possible to more precisely adjust the processing capacity of the membrane separation device, for example, as compared with a case where the above parameters are determined only on the basis of the characteristic value of the primary treated water.

### [Advantageous Effects of Invention]

According to the present invention, it is possible to provide a water treatment system and a wastewater treatment method capable of performing more accurate control thereof.

### [Brief Description of Drawings]

Fig. 1 is an overall view of a water treatment system according to an embodiment of the present invention.
Fig. 2 is a flowchart illustrating steps of a water treatment method according to the embodiment of the present invention.
Fig. 3 is a diagram illustrating a processing flow of a control device according to the embodiment of the present invention.

### [Description of Embodiments]

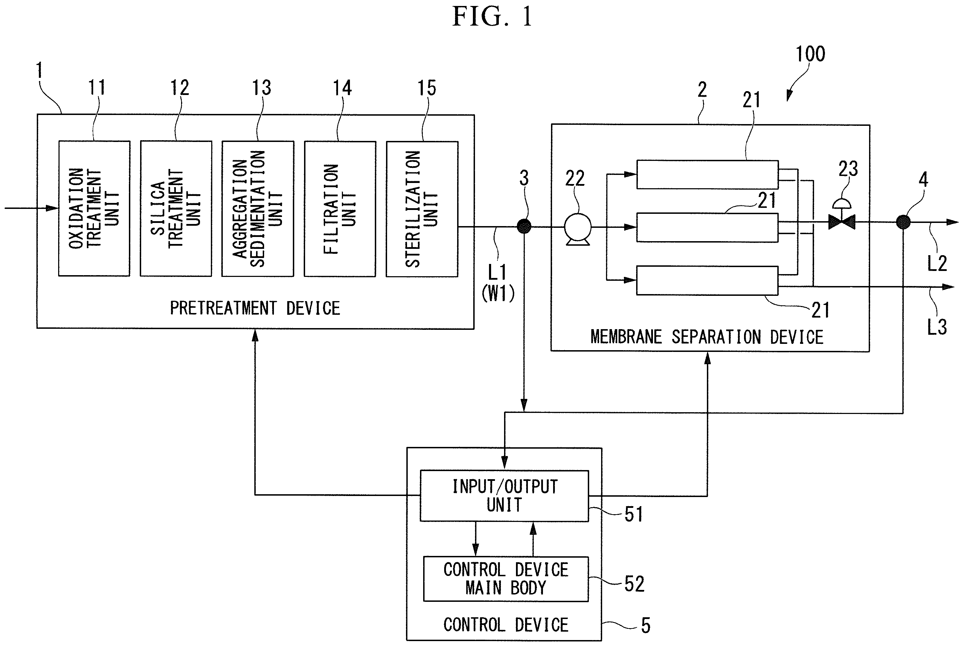

An embodiment of the present invention will be described with reference to Figs. 1 to 3. As illustrated in Fig. 1, a water treatment system 100 includes a pretreatment device 1, a membrane separation device 2, a first sensor device 3, a second sensor device 4, and a control device 5.

The water treatment system 100 is used for performing a desalination treatment on water to be treated such as seawater to produce fresh water. The pretreatment device 1 includes an oxidation treatment unit 11, a silica treatment unit 12, an aggregation sedimentation unit 13, a filtration unit 14, and a sterilization unit 15. The water to be treated passes through each of these devices in the above order.

The oxidation treatment unit 11 is a device for removing heavy metals contained in the water to be treated. In the oxidation treatment unit 11, an oxidizing agent is supplied to the water to be treated. As a result, heavy metals in the water to be treated are precipitated in the liquid as metal oxides. The water to be treated (oxidation-treated water) subjected to the oxidation treatment is sent to the subsequent silica treatment unit 12.

The silica treatment unit 12 is a device for removing silica (silica ions) contained in the oxidation-treated water. In the silica removal unit, an appropriate agent (silica treated agent) is appropriately selected and supplied to the water to be treated subjected to the oxidation treatment. As a result, the silica in the oxidation-treated water is precipitated in the liquid as silicon compounds. The oxidation-treated water (silica treated water) subjected to silica treatment is sent to the subsequent aggregation sedimentation unit 13.

The aggregation sedimentation unit 13 is a device for aggregating and precipitating the metal oxides or silicon compounds contained in the silica treated water. In the aggregation sedimentation unit 13, an aggregation agent is supplied to the silica treated water. As a result, the metal oxides and the silicon compounds in the silica treated water are precipitated after aggregation. This results in precipitation-treated water. The precipitation-treated water is sent to a subsequent filtration unit 14.

In the filtration unit 14, the precipitates (aggregated metal oxides or silicon compounds) contained in the precipitation-treated water are filtered off to generate filtered water. The filtered water is sent to the subsequent sterilization unit 15.

The sterilization unit 15 is a device for removing microorganisms (fungi) and the like contained in the filtered water. In the sterilization unit 15, a sterilizing agent for removing microorganisms and the like is supplied to the filtered water. As a result, the microorganisms contained in the filtered water are roughly killed, and primary treated water W1 is generated. Further, the primary treated water W1 at this stage still contains ionic components, such as salts and inorganic components, which have not been removed in the previous step. The primary treated water W1 is sent to the subsequent membrane separation device 2 through a primary treated water line L1.

The oxidation treatment unit 11, the silica treatment unit 12, the aggregation sedimentation unit 13, and the sterilization unit 15 described above are connected to a control device 5 to be described later. That is, the amounts of the oxidizing agent, the silica treating agent, the aggregation agent, and the sterilizing agent supplied are adjusted by the control device 5.

The membrane separation device 2 has a plurality of vessels 21 having a reverse osmosis membrane, a pump 22, and a pressure-adjusting valve 23. Concentrated water containing salts and permeable water (fresh water) are generated by causing the primary treated water W1 to permeate the vessels 21. Among them, concentrated water is sent to another device (not illustrated) through a concentrated water line L2. The permeable water is sent to another device (not illustrated) through a permeable water line L3 in the same manner as the concentrated water.

A pump 22 is provided on the upstream side of the vessel 21, and a pressure-adjusting valve 23 is provided on the downstream side thereof. The supply pressure of the primary treated water W1 to the vessel 21 is adjusted by the pump 22 and the pressure-adjusting valve 23. That is, by changing a discharge amount of the pump 22 and an opening degree of the pressure-adjusting valve 23, the supply pressure of the primary treated water W1 is adjusted. The pump 22 and the pressure-adjusting valve 23 are controlled by a control device 5 to be described later. Through such adjustment, a recovery rate (a water recovery rate) of the permeable water discharged from the membrane separation device 2 changes.

The first sensor device 3 is provided on the primary treated water line L1 (that is, a region between the pretreatment device 1 and the membrane separation device 2). The first sensor device 3 is a device for detecting the presence or absence of biofouling in the primary treated water W1. Specifically, a membrane fouling simulator (MFS) is suitably used as the first sensor device 3. An MFS has a small reverse osmosis membrane device called an MFS flow cell therein.

The primary treated water W1 is supplied to the MFS at a constant flow rate and a constant pressure. At this time, a pressure difference occurs between before and after the MFS flow cell. Furthermore, when biofouling occurs in the MFS flow cell due to the primary treated water W1, a change occurs in the pressure difference before and after the MFS flow cell. Specifically, when biofouling occurs, the pressure difference increases. By detecting the change in the pressure difference, the presence or absence of biofouling caused by the primary treated water W1 is detected. The presence or absence of the occurrence of biofouling detected in this manner is sent as an electrical signal to the control device 5 to be described later.

The second sensor device 4 is provided on the concentrated water line L2 (that is, on the downstream side of the membrane separation device 2). The occurrence of biofouling caused by the primary treated water W1 is detected in the first sensor device 3, whereas the presence or absence of scale precipitation on the reverse osmotic membrane which is generated due to the crystallization of ion species contained in the concentrated water is acquired in the second sensor device 4. The presence or absence of scale precipitation is sent as an electrical signal to the control device 5 to be described later.

The control device 5 controls the pretreatment device 1 and the membrane separation device 2, on the basis of the presence or absence of the occurrence of biofouling acquired by the first sensor device 3 and the presence or absence of scale precipitation acquired by the second sensor device 4. Specifically, the control device 5 includes an input/output unit 51 which performs input/output of electrical signals between the first sensor device 3 and the second sensor device 4, and a control device main body 52 that generates control signals (operating parameters) for controlling the pretreatment device 1 and the membrane separation device 2, on the basis of input electrical signals (presence or absence of biofouling and presence or absence of scale precipitation).

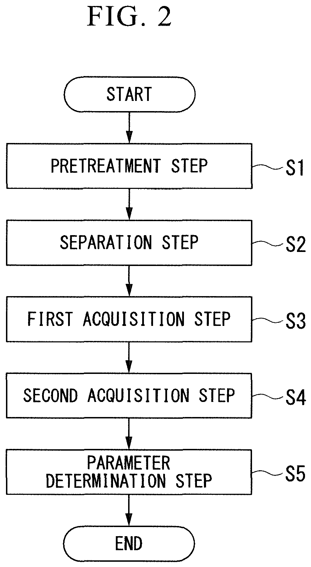

Next, the operation (wastewater treatment method) of the water treatment system 100 will be described with reference to Fig. 2. First, water to be treated is introduced into the pretreatment device 1. The water to be treated is subjected to the aforementioned respective treatments (oxidation treatment, silica treatment, aggregation and precipitation, filtration, and sterilization) by the pretreatment device 1 (pretreatment step S 1). As a result, the primary treated water W1 is generated.

Next, the primary treated water W1 is sent to the subsequent membrane separation device 2 through the primary treated water line L1. In the membrane separation device 2, the primary treated water W1 is separated into concentrated water and permeable water by a reverse osmosis membrane (separation step S2). Both the concentrated water and the permeable water are sent to other devices and equipment (not illustrated).

Here, when the operation as described above is continued for a long time or when fluctuation occurs in the water quality of the water to be treated, in some cases, the biofouling and the scale precipitation described above may occur in the membrane separation device 2. When biofouling or scale occurs, the reverse osmosis membrane in the membrane separation device 2 may clog and there is a possibility that the treatment performance (amount of permeable water generated) may decrease. Therefore, in the water treatment system 100 according to the present embodiment, the presence or absence of biofouling in the primary treated water W1 is detected by the first sensor device 3, and the presence or absence of scale precipitation in the concentrated water is detected by the second sensor device 4 (first acquisition step S3, and second acquisition step S4). Further, the first acquisition step S3 may be executed prior to the separation step S2.

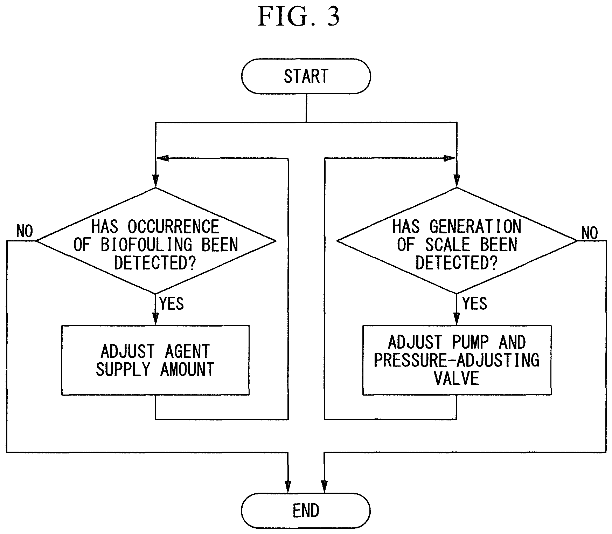

In the control device 5, operating parameters in the pretreatment device 1 and the membrane separation device 2 are determined on the basis of the presence or absence of the occurrence of biofouling and the presence or absence of scale precipitation (parameter determination step S5). The operation of the control device 5 will be described with reference to Fig. 3.

First, the presence or absence of the occurrence of biofouling in the MFS (first sensor device 3) is input to the control device 5 as an electrical signal. When the biofouling occurs in the first sensor device 3 (that is, when the biofouling amount reaches a value greater than 0), it is found that the primary treated water W1 is in a state in which biofouling is likely to occur. Therefore, the control device 5 first adjusts the supply amounts of each agent (oxidizing agent, silica treating agent, aggregation agent, and sterilizing agent) in the pretreatment device 1 depending on the presence or absence of biofouling, and reduces the amounts of microorganisms and organic substances. This reduces the ease of the occurrence of biofouling in the primary treated water W1.

Further, the control device 5 adjusts the water recovery rate in the membrane separation device 2 by changing the discharge amount of the pump 22 in the membrane separation device 2 and the opening degree of the pressure-adjusting valve 23. More specifically, when it is determined that biofouling is likely to occur, the pump 22 and the pressure-adjusting valve 23 are controlled in a manner such that the water recovery rate is lowered.

Furthermore, the presence or absence of scale precipitation in the above-described second sensor device 4 is input to the control device 5. In the case where scale has been precipitated by the second sensor device 4 (that is, when the scale precipitation amount becomes a value greater than 0), it is found that the concentrated water is in a state in which scale easily precipitates. Accordingly, the control device 5 adjusts the supply amounts of each agent (oxidizing agent, silica treating agent, and aggregation agent) in the pretreatment device 1 depending on the presence or absence of scale precipitation, and adjusts the amount of the inorganic components in the primary treated water W1.

Further, the control device 5 adjusts the water recovery rate in the membrane separation device 2, by changing the discharge amount of the pump 22 in the membrane separation device 2 and the opening degree of the pressure-adjusting valve 23. Specifically, when it is determined that the scale is easily precipitated, the pump 22 and the pressure-adjusting valve 23 are controlled in a direction of lowering the water recovery rate.

As described above, the control device 5 controls the supply pressure and the supply flow rate of the primary treated water W1, on the basis of the characteristic value (presence or absence of the occurrence of biofouling) of the primary treated water W1 and the characteristic value of the concentrated water (presence or absence of scale precipitation). This makes it possible to more precisely adjust the processing capacity of the membrane separation device 2, for example, as compared with the case where the above parameters are determined only on the basis of the characteristic value of the primary treated water W1.

Furthermore, according to the above configuration, simply by changing the opening degree of the pressure-adjusting valve 23 and the discharge amount of the pump 22 on the basis of the presence or absence of the occurrence of biofouling and the presence or absence of scale precipitation, the processing capacity of the membrane separation device 2 can be easily adjusted.

In addition, according to the above configuration, the presence or absence of scale precipitation in the reverse osmosis membrane is used as an input value for the control device 5. That is, since the operating parameters including the supply pressure and the supply flow rate of the primary treated water W1 are determined on the basis of the deposition of the scale, it is necessary to operate the membrane separation device 2 with a processing capacity to the extent that scale does not precipitate.

The embodiments of the present invention have been described above. Note that the above configuration is merely an example, and various modifications can be made within the scope that does not depart from the gist of the present invention.

For example, in the above embodiment, an example in which an MFS is used as the first sensor device 3 has been described. However, the first sensor device 3 is not limited to an MFS. That is, various devices can be used as the first sensor device 3, as long as ease of the occurrence of biofouling can be detected. Likewise, various devices can be used as the second sensor device 4, as long as ease of scale precipitation can be detected.

Furthermore, it is also possible to provide priority to the presence or absence of biofouling detected by the first sensor device 3 and to the presence or absence of scale precipitation detected by the second sensor device. For example, when it is desired to intensively suppress the deposition of scale rather than the occurrence of biofouling, it is possible to control the membrane separation device 2 only on the basis of the scale precipitation detected by the second sensor device 4. On the contrary, when it is desired to intensively suppress the occurrence of biofouling rather than the deposition of scale, it is possible to control the membrane separation device 2 only on the basis of the occurrence of biofouling detected by the first sensor device 3.

### [Reference Signs List]

100 Water treatment system
1 Pretreatment device
2 Membrane separator
3 First sensor device
4 Second sensor device
5 Control device
11 Oxidation treatment unit
12 Silica treatment unit
13 Aggregation sedimentation unit
14 Filtration unit
15 Sterilization unit
21 Vessel
22 Pump
23 Pressure-adjusting valve
51 Input/output unit
52 Control device main body
S1 Pretreatment step
S2 Separation step
S3 First acquisition step
S4 Second acquisition step
S5 Parameter determination step
L1 Primary treated water line
L2 Concentrated water line
L3 Permeable water line
W1 Primary treated water

## Claims

1. A water treatment system, comprising:
a pretreatment device which generates primary treated water by performing pretreatment on water to be treated;
a membrane separation device having a reverse osmosis membrane through which the primary treated water passes to be separated into concentrated water and permeable water;
a first sensor device provided between the pretreatment device and the membrane separation device to detect the presence or absence of the occurrence of biofouling caused by the primary treated water;
a second sensor device provided on a downstream side of the membrane separation device to detect the presence or absence of scale precipitation caused by the concentrated water; and
a control device which determines operating parameters including a supply pressure and a supply flow rate of the primary treated water to the membrane separation device, on the basis of the presence or absence of the occurrence of the biofouling and the presence or absence of the scale precipitation.

2. The water treatment system according to Claim 1, further comprising:
a pressure-adjusting valve which changes a supply pressure of the primary treated water to the membrane separation device; and
a pump which changes the supply flow rate of the primary treated water,
wherein the control device adjusts the operating parameter, by changing an opening degree of the pressure-adjusting valve and a discharge amount of the pump, on the basis of the presence or absence of the occurrence of the biofouling and the presence or absence of the scale precipitation.

3. A water treatment method, comprising:
a pretreatment step of generating primary treated water by performing pretreatment on water to be treated;
a separation step of separating the primary treated water into concentrated water and permeable water by causing the primary treated water to pass through a reverse osmosis membrane;
a first acquisition step of detecting the presence or absence of the occurrence of biofouling caused by the primary treated water;
a second acquisition step of detecting the presence or absence of scale precipitation caused by the concentrated water; and
a parameter determining step of determining operating parameters in the pretreatment step and the separation step, on the basis of the presence or absence of the occurrence of the biofouling and the presence or absence of the scale precipitation.
